Europäisches Patentamt

European Patent Office

Office européen des brevets

(11) Publication number: 0 172 587
A1

## (12) EUROPEAN PATENT APPLICATION

(21) Application number: 85200711.1

(22) Date of filing: 07.05.85

(51) Int. Cl.⁴: A 01 K 5/01
B 65 D 17/42

(30) Priority: 29.05.84 NL 8401729

(43) Date of publication of application:
26.02.86 Bulletin 86/9

(84) Designated Contracting States:
BE DE FR GB LU NL

(71) Applicant: Thomassen & Drijver-Verblifa N.V.
Zutphenseweg 51
NL-7418 AJ Deventer(NL)

(72) Inventor: Kokje, Teunis
No. 11, Brinkerinckbaan
NL-7431 BX Diepenveen(NL)

(74) Representative: Schumann, Bernard Herman
Johan et al,
OCTROOIBUREAU ARNOLD & SIEDSMA Sweelinckplein
1
NL-2517 GK The Hague(NL)

(54) Device containing food.

(57) A device containing food, characterized by a package (6), containing food, which package (16) serves, in opened condition, as a food container, and by means (11) that retain the food container at a fixed place. According to a first embodiment the retaining means (11) to retain the food container consist of an adhesive layer attached to the bottom of the package (6); and to a second embodiment of a holder (40) used in combination with the package (16).

The holder (40) has a deepening in which the package (6) can be clamped. Preferable the holder (40) is provided with clamping means (41) for clamping the opened package (6) around the circumferential rim of same.

FIG.14

Croydon Printing Company Ltd.

DEVICE CONTAINING FOOD

---------------------------

The present invention relates to a device containing food.

On feeding animals, particularly a cat or a dog, a can of animal food is opened and part of it, with the aid of a fork, is put into a food container from which the animal takes it. The can with the rest of the food is subsequently, covered or not, placed in the refrigerator, whereas the fork used and possibly a can opener are cleaned. After the animal has eaten, the food container needs to be cleaned as well.

When using eatables from, say, an opened can, it is attractive to present this can in an appetising manner.

The invention has for its object to provide a device containing food, whereby on the one hand, the various actions such as filling a food container and cleaning the utensils used as well as the food container itself, can be avoided as much as possible. On the other hand, the can should have an appetising appearance. The invention is applied specifically to cans containing only the meal for a cat or dog, or otherwise when the keeping quality of the food is limited after

- 2 -

0172587

opening of the can.

In accordance with the invention, the device containing food is characterized by a package, containing food, which package serves, in opened condition, as a food container, and by means that retain the food container at a fixed place.

According to a first embodiment, the retaining means to retain the food container, consist of an adhesive layer attached to the bottom of the package. According to a second embodiment they consist of a holder used in combination with the package. Thus is avoided that the food container can be removed during the taking of food, whereas a light weight sort of package material for the food can be used.

If the holder has a deepening in which the package is received clampingly, the package can be placed in the holder.

If the holder is provided with clamping means clamping the opened package around the circumference, the opened package is clamped by the holder, while an opening is available through which the food in the opened package may be taken.

In order to prevent the animals or, for instance, children form injuring themselves on the sharp cutting edge that arises from opening the package, particularly a metal can, the device is also characterized by means covering a cutting edge formed on opening the package.

If the covering means comprise plastic material arranged adjacent to the cutting edge, which plastic material on forming the cutting edge, nestles thereover, and preferably the plastic material is comprised in a ring that is connected with the package, these covering means may be applied during or after the manufacture of the package containing the food.

If the covering means are comprised in a ring that is to be placed on the opening formed on openng the package, a separate ring may be used for a number of packages, so that the cost of manufacture remains relatively low.

Finally, it is possible that covering means are comprised in the holder, and cover the cutting edge, when the holder is clamped on the package.

Another aspect of the invention relates to the same device, however, characterized by a package filled with food, which on opening serves as a food container and by means in covering a cutting edge formed on opening the package.

The present invention furhter relates to a system, consisting of an enclosure, enclosing the package containing food, a holder in which the opened package is placed, and also a ring to cover the cutting edge formed upon opening the package; which ring is connected with the casing, in such a manner that it serves as a hook for the system. Thus, the unit may be displayed in an elegant way.

Conclusively, the invention relates to the means holding the food container at a fixed place and/or the covering means applicable to the device.

Mentioned and other features will be elucidated here, by a number of embodiments of the device containing food, in accordance with the invention without limiting the invention thereto, and referring to the attached drawings.

In the drawings represent:

Fig. 1 and 2 a perspective top view and bottom view respectively of a device containing food, for animals;

Fig. 3 a section according to line III-III in fig. 1;

Fig. 4 a section similar to that of fig. 3, but with the package in opened condition;

Fig. 5 a perspective view of another device;

Fig. 6 a section according to line VI-VI in fig. 5;

Fig. 7 a section similar to that of fig. 6, but with the package in opened condition;

Fig. 8 and 9 sections similar to fig. 6 and 7, respectively, of a variant;

Fig. 10 a perspective view of another embodiment of the device, in accordance with the invention;

Fig. 11 a section according to line XI-XI in fig. 10;

Fig. 12 a section similar to that of fig. 11 with the package in closed condition;

Fig. 13 a perspective view of a combination, in accordance with the invention;

Fig. 14 a perspective view of another embodiment of the device, in accordance with the invention;

Fig. 15 a section through line XV-XV in fig. 14;

Fi. 16 a perspetive view of a device on a dining table.

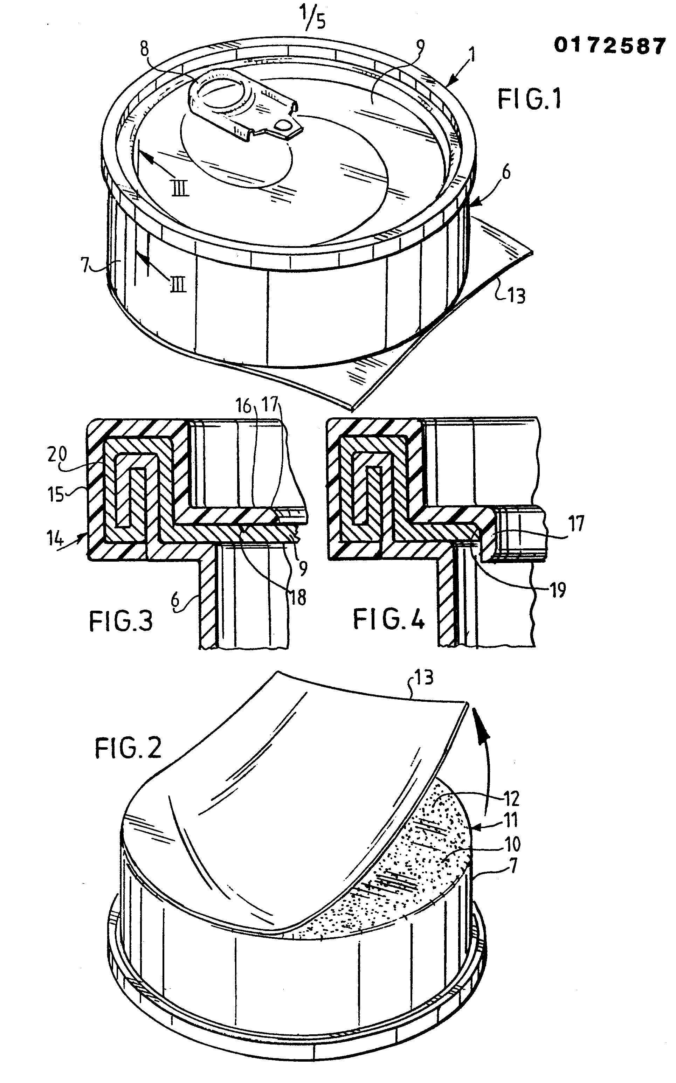

Fig. 1 shows a device 1 contianing food and is mainly intended for feeding animals, particularly dogs and/or cats. The device consists of a package 6, containing animal food 5, in the form of a metal can 7, of which the tear-off cover 9 can be removed manually by pulling tap 8. The package 6 serves as a food container when opened, i.e. when the cover 9 has been torn off. To prevent a displacement of the package 6, when an animal takes the food 5 from the can 7, this can 7 is provided with means 11 that keep the food container at a fixed place, and in this case consist of an adhesive layer 12, fitted to a bottom 10 and covered with a removable protective sheet 13. By means of the adhesive layer 12, the can 7 might be fixed temporarily to, for instance, the kitchen floor.

In order to protect the animal against hurting itself on the sharp edge when it takes the food 5 from the package 6, this package 6 is provided with covering means 14, which in this case consist of a ring 15 fastened to the package and at its inner circumferential rim 16 plastic material 17 as such that, after removal of the tear-off cover 9, along a notch 18, this plastic material 17 covers the cutting edge 19 formed (see fig. 3 and 4). The ring 15 can be shrunk unremovable around the folded seam 20 between can 7 and tear-of cover 9.

After the can 7 has been emptied, no cleaning of same is necessary, and the tear-off cover 9 as well as the can 7 may be discarded at once.

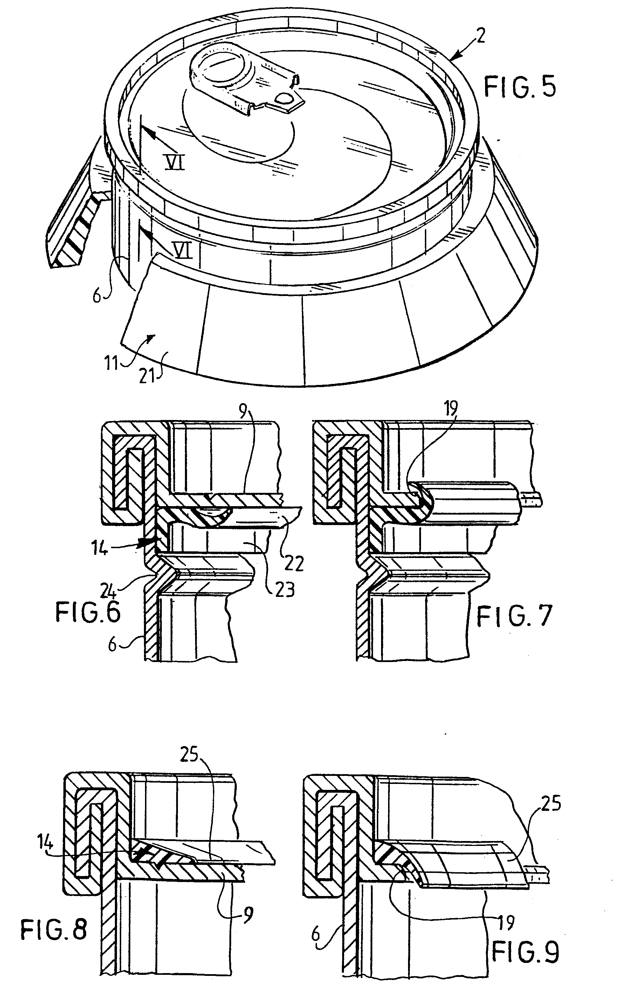

Fig. 5 shows a device 2 in accordance with the invention for feeding animals, and here also the package 6 serves, in opened condition, as a food container 6 and whereby the means 11 have the form of a ring-shaped holder 21 cooperating with the package 6 and in which the package 6 is clamped.

In this device 2, the covering means 14 consist of plastic material 22 arranged adjacent the cutting edge 19 to be formed. After the tear-off cover 9 is removed, whereby the cutting edge 19 is formed, the plastic material 22 nestles around the cutting edge 19. In fig. 6 and 7, the plastic material 22 is part of a ring 23, which prior to applying the tear-off cover 9 on the can 7, is arranged in the can 7 lying against a rim 24.

In the variant shown in fig. 8 and 9, the covering means 14 in the form of plastic material 25, are located at the outside of tear-off cover 9. After removal of tear-off cover 9, the material 25 bends to the inside of the package 6 and so covers cutting edge 19.

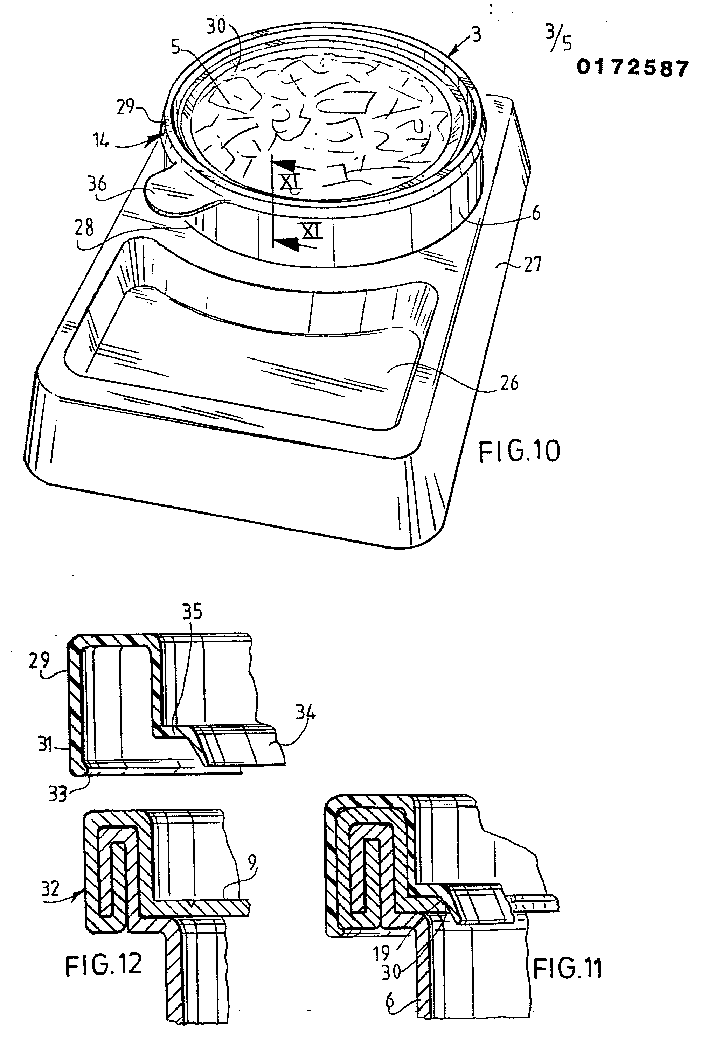

With the device 3 shown in fig. 10, for feeding animals, the package 6 is placed in a holder 27, having a watering trough 26 comprising a deepening 28, in which the package 6 is clamped. After removal of the tear-off cover 9, the package 6 is provided with a ring 29 comprised by covering means 14, which ring 19 is applied over the opening 30 formed by removal of the tear-off cover 9.

As is shown more in detail in fig. 11 and 12, the ring 29 has part with a generally U-shape that snaps after removal of the tear-off cover 9 around the folded seam 32 with the aid of the ribs 33. At this inner circumferential edge this U-shaped part 31 is provided with a material part 35, which is mainly horizontal and is to rest on the remaining part of the tear-off cover 9, and with an inclining part 34 which overlaps the cutting edge 19 towards the interior of the package.

Since the ring 29 is reusable, it is provided with a lip 36 to remove same, after the animal has taken its food 5.

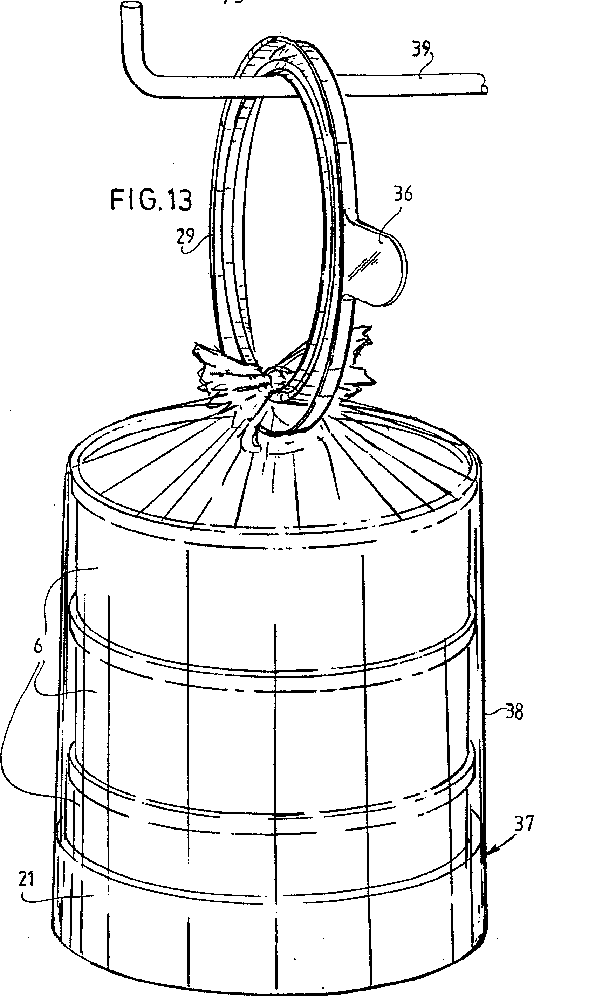

Fig. 13 shows a system 37, consisting of enclosure 38, for instance of shrinking foil, the package 6 in the enclosure 38 and for instance a holder 21. The system is completed by the ring 29, which is connected as such with the enclosure 38 that it forms a hook with which the system 37 can be hooked on a rod 39 of for instance display means.

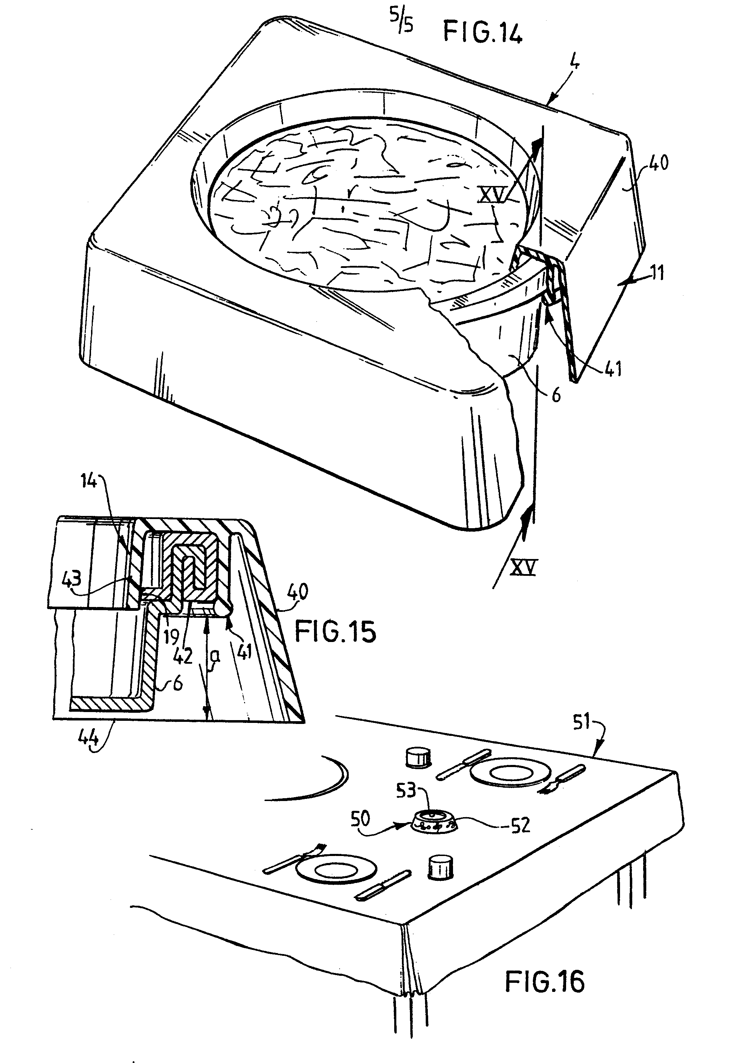

Fig. 14 shows a device according to the invention, for feeding animals. In this case, the retaining means 11 consist

0172587

of a holder 40 with comprising clamping means 41, with which the opened package 6 is clamped at its circumferentail rim 42.

In this case the covering means 14 are included in the holder 40, and consist of the downwardly extending part 43, extending over the sharp cutting edge 19 after the package 6 is retained in the holder 40 using the clamping means 41. The distance $a$ between an under edge 44 of the holder 40, and the clamping means 41 as clamped in position around the circumferentail rim 42, the package 6 is free from the surface underneath.

Finally fig. 16 shows the use of the device 50, in accordance with the invention, on a dining table 51. For instance, the holder 52 clamps firmly the can 53, which contains food, such as hashed meat or liver paste. Many features and measures, described for the devices wherewith the animals can be fed, might also be applied advantageously, if the package contains food for human use, and particularly if children handle the device.

The holders 21, 27, 43 and 52 described, should have preferable a weight, depending on the empty weight of the package 6, so as to prevent a displacement of the package 6 when it serves as a food container and the contents are being taken form it.

Altough not described for each embodiment, it will be clear that the devices 1 – 4 have also an effective function if, apart from the use of the package 6 as a food container, they are only characterized by the covering means 14.

Claims

1. A device containing food, <u>characterized by</u> a package, containing food, which package serves, in opened condition, as a food container, and by means that retain the food container at a fixed place.

2. A device as claimed in claim 1, <u>characterized in that</u> the retaining means to retain the food container consist of an adhesive layer attached to the bottom of the package.

3. A device as claimed in claim 2, <u>characterized in that</u> the adhesive layer is covered by a protective sheet.

4. A device as claimed in claim 1, <u>characterized in that</u> the retaining means to retain the food container consist of a holder used in combination with the package.

5. A device as claimed in claim 4, <u>characterized in that</u> the holder has a deepening in which the package can be clamped.

6. A device as claimed in claim 4, <u>characterized in that</u> he holder is provided with clamping means for clamping the opened package around the circumferential rim of same.

7. A device as claimed in any of the preceding claims, characterized by means covering a cutting edge formed on opening the package.

8. A device as claimed in claim 7, characterized in that the covering means comprise plastic material arranged adjacent to the cutting edge, which plastic material on forming the cutting edge nestles thereover.

9. A device as claimed in claim 8, characterized in that the plastic material is comprised in a ring that is connected with the package.

10. A device as claimed in claim 7, characterized in that covering means are comprised in a ring that is to be placed on the opening formed on opening the package.

11. A device as claimed in claim 6 and claim 7, characterized in that the covering means are comprised in the holder, and cover the cutting edge, when the holder is clamped on the package.

12. A device containing food, characterized by a package, filled with food, which on opening serves a food container, and by means covering a cutting edge formed on opening the package.

13. A device as claimed in claim 12, characterized in that the covering means comprise plastic material arranged adjacent to the cutting edge, which plastic material on forming the cutting edge nestles thereover.

14. A device as claimed in claim 13, characterized in that the plastic material is comprised in a ring that is connected with the package.

15. A device as claimed in claim 12, characterized in that covering means are comprised in a ring that is to be placed on the opening formed on opening the package.

16. A system comprising an enclosure which contains at least one package filled with food, at least one holder as claimed in claim 4 or 5, and at least one ring as claimed in claim 10, connected to the enclosure and serving as a hook for the system.

17. Holder- and covering means, intended to be applied to a device as claimed in one of the claims 1 -15.

1/5

0172587

FIG.1

FIG.3

FIG.4

FIG.2

12536_62

FIG.5

FIG.6

FIG.7

FIG.8

FIG.9

FIG.10

FIG.12

FIG.11

FIG.13

0172587

FIG.14

FIG.15

FIG.16

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | DE-A-3 033 974 (K. SCHWARZ) <br> * Whole document * | 1 | A 01 K 5/01 <br> B 65 D 17/42 |
| Y | | 12 | |
| A | | 4,5 | |
| X | GB-A-2 034 569 (K.S. IMHOFF) <br> * Page 1, line 99 - page 2, line 46; figures 1-7 * | 1 | |
| A | | 4,5,12 | |
| A | BE-A- 882 800 (S.P.R.L. AMPLIKART P.V.B.A.) <br> * Page 1, lines 3-6; figures A-C * | 1,2,4, 5 | TECHNICAL FIELDS SEARCHED (Int. Cl.4) |
| Y | US-A-4 016 311 (D.H. ELLERBROCK et al.) <br> * Column 2, line 41 - column 3, line 12; figures 3,4 * | 12 | A 01 K <br> B 65 D |
| A | | 7-9,13 ,14 | |

--- -/-

The present search report has been drawn up for all claims

| Place of search | Date of completion of the search | Examiner |
|---|---|---|
| THE HAGUE | 15-08-1985 | NEHRDICH H.J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

0172587

Application number

EUROPEAN SEARCH REPORT

European Patent
Office

EP 85 20 0711

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 175 818 (CONTINENTAL CAN CO. INC.) <br> * Page 7, lines 23-28; figures 3-6 * <br> ----- | | |

TECHNICAL FIELDS SEARCHED (Int. Cl.4)

The present search report has been drawn up for all claims

| Place of search | Date of completion of the search | Examiner |
|---|---|---|
| THE HAGUE | 15-08-1985 | NEHRDICH H.J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82